# EUROPÄISCHE PATENTSCHRIFT

(11) **EP 3 344 891 B1**
(45) Veröffentlichungstag und Bekanntmachung des Hinweises auf die Patenterteilung: **10.01.2024**
(21) Anmeldenummer: 16770878.3
(22) Anmeldetag: 01.09.2016
(51) Int. Cl.: F16D 55/2265, F16J 3/04, F16D 55/227

(54) **BREMSSATTELFÜHRUNG FÜR EINE SCHEIBENBREMSE, FÜHRUNGSHOLM FÜR EINE BREMSSATTELFÜHRUNG**
BRAKE-CALIPER GUIDE FOR A DISC BRAKE, GUIDE MEMBER FOR A BRAKE-CALIPER GUIDE
GUIDE D'ÉTRIER DE FREIN POUR UN FREIN À DISQUE, LONGERON DE GUIDAGE POUR UN GUIDE D'ÉTRIER DE FREIN

(30) Priorität: 03.09.2015 DE 102015114737
(43) Veröffentlichungstag der Anmeldung: 11.07.2018
(73) Patentinhaber: BPW Bergische Achsen KG, 51674 Wiehl (DE)
(72) Erfinder: ABT, Christian, 51643 Gummersbach (DE); SCHWARZ, Michael, 51469 Bergisch Gladbach (DE); NEUMANN, Arthur, 51597 Morsbach (DE)
(74) Vertreter: DREISS Patentanwälte PartG mbB
(86) Internationale Anmeldenummer: PCT/DE2016/100395
(87) Internationale Veröffentlichungsnummer: WO 2017/036459

(56) Entgegenhaltungen:
- EP-A1- 2 233 767
- FR-A1- 2 976 991
- GB-A- 2 119 038
- JP-U- S59 116 645

## Beschreibung

Die Erfindung bezieht sich auf das Gebiet der Bremssattelführungen für Scheibenbremsen, wie z. B. für Scheibenbremsen des Gleitsattel- bzw. Schwimmsatteltyps. Bei diesen Scheibenbremsen erfolgt eine Relativbewegung des Bremssattels gegenüber dem achsfesten Bremsträger. Demgemäß ist eine Führung in Achsenrichtung erforderlich. Als Führungselemente dienen Führungsholme. Zugleich müssen zum Schutz gegen ein Eindringen von Staub und Schmutz Abdichtmaßnahmen vorgesehen sein, wozu häufig aus dem Stand der Technik bekannte Faltenbälge eingesetzt werden.

Bei der Bremssattelführung nach der DE 10 2004 003 083 A1 erfolgt die Führung des Bremssattels an dem achsfesten Bremsträger mittels Gleitlagern aus jeweils einem an dem Bremsträger befestigten Führungsholm und einer Bohrung am Bremssattel. Die Bohrung befindet sich an einer Lagerbuchse, die in eine umgebende Bohrung des Bremssattels eingepresst ist. Zum Schutz der Führung gegen ein Eindringen von Staub und Schmutz dient ein Faltenbalg, der mit seinem einen Ende gegenüber dem Bremssattel, und mit seinem anderen Ende gegenüber dem Bremsträger festgelegt ist. Der gegenüber dem Bremsträger festgelegte Endabschnitt ist als Wulst gestaltet, der in einer Ringnut des Führungsholms sitzt. Zur Sicherung des Wulstes dient ein zusätzlicher Ring, der den Führungsholm umgibt und sich bis über den Wulst erstreckt und diesen so sichert.

Weiter ist aus der EP 2 233 767 A1 eine Bremssattelführung bekannt, bei welcher innen an dem Ring eine Befestigungsstruktur vorgesehen ist, welche den Ring in dem Faltenbalg abgewandter Längsrichtung an der Ringnut verriegelt. Durch diese Längsverriegelung des Rings wird der wulstförmige Endabschnitt des Faltenbalgs auch dann noch sicher in der Nut des Führungsholms gehalten, wenn der Faltenbalg, etwa während des Montageprozesses, stark gestaucht wird.

Aufgabe der Erfindung ist es, eine Bremssattelführung, und einen Führungsholm zur Verfügung zu stellen, mit denen die Positionierung eines aus dem Stand der Technik bekannten Faltenbalges, bspw. aus der JP 59-116645, und/oder des Ringes an dem Führungsholm weiter und auch dauerhaft verbessert werden kann.

Zur Lösung dieser Aufgabe wird eine Bremssattelführung mit den Merkmalen des Anspruchs 1 und ein Führungsholm für eine Bremssattelführung mit den Merkmalen des Patentanspruchs 7 vorgeschlagen.

Der Führungsholm ist, in Längsrichtung versetzt zu dem Nutboden der Ringnut, mit einer Einsenkung versehen. Die an dem Ring ausgebildete Befestigungsstruktur liegt gegen eine Wandung dieser Einsenkung an. Zur Erzielung eines Formschluss ist die Wandung eine der Ringnut zugewandte, also zu der Ringnut hin gerichtete Wandung. Die bildet Ringnut zusammen mit der Einsenkung einen durch eine Stufe unterteilten, gemeinsamen Nutraum, wobei sich die Wandung von der Stufe aus nach außen erstreckt.

Für die Abdichtung des an dem Faltenbalg angeformten Wulstes ist dieser mit einer an dem Wulst angeformten Dichtlippe versehen. Es kommt auf diese Weise zu einem in Umfangsrichtung vollständigen Kontakt dieser Dichtlippe mit dem stufenförmigen Querschnitt der Ringnut, wodurch eine besonders gute und dauerhafte Abdichtung des Faltenbalgs gegenüber dem Führungsholm erzielt wird.

Verschiedene Ausgestaltungen der Erfindung sind in den jeweiligen Unteransprüchen angegeben.

So wird hinsichtlich des Führungsholms der Bremssattelführung vorgeschlagen, dass sich die den Ring in Längsrichtung verriegelnde Einsenkung zwischen der Ringnut und dem der Ringnut näher gelegenen Ende der beiden Enden des Führungsholms befindet. Dieses näher gelegene Ende des Führungsholms ist jenes, mit dem der Führungsholm an dem Bremsträger der Scheibenbremse befestigt ist.

Vorzugsweise ist die Einsenkung eine sich über den Umfang des Führungsholms erstreckende Nut, deren Tiefe geringer ist als die Tiefe der Ringnut im Bereich des Nutbodens.

Die Einsenkung kann entweder räumlich getrennt von der Ringnut an dem Führungsholm ausgebildet sein, oder die Ringnut bildet zusammen mit der Einsenkung einen durch eine Stufe unterteilten, gemeinsamen Nutraum, wobei sich die Wandung von der Stufe aus nach außen erstreckt. In diesem Fall liegt an der Stufe der Wulst des Faltenbalgs an, und an der Wandung stützt sich die Befestigungsstruktur des Rings ab. Vorzugsweise liegt an der Stufe nur der Wulst des Faltenbalgs an, und an der Wandung der Einsenkung stützt sich nur die Befestigungsstruktur des Rings ab.

Ferner wird vorgeschlagen, dass die radiale Höhe der Stufe zwischen einem Drittel und zwei Drittel der Tiefe der Ringnut im Bereich des Nutbodens beträgt. Des Weiteren sollte der Nutboden in axialer Richtung eine Breite aufweisen, welche fünffach bis zehnfach so groß ist, wie die sich in axialer Richtung erstreckende Breite der Stufe ist.

Hinsichtlich des Faltenbalgs wird mit einer nicht erfindungsgemäßen Ausgestaltung vorgeschlagen, dass die Dichtlippe dem Faltenbalg abgewandt an dem Wulst angeformt ist. Durch die Dichtlippe wird die Gesamtbreite des Wulstes in Längsrichtung des Faltenbalgs vergrößert. Trotzdem wird verhindert, dass das Einsetzen des Wulstes in die Ringnut durch die zusätzliche Dichtlippe erschwert wird. Denn gemäß einer nicht erfindungsgemäßen Ausführungsform ist die Dichtlippe an einer Innenfläche des Wulstes angeformt. Auch kann die Dichtlippe an einer dem Faltenbalg abgewandten Stirnfläche des Wulstes angeformt sein. Nicht erfindungsgemäß stützt sich die Dichtlippe an dem Nutboden der Ringnut, an einer axial versetzt zu dem Nutboden angeordneten Einsenkung und an einer Stufe zwischen Ringnut und Einsenkung ab. Nicht erfindungsgemäß kann sich die Dichtlippe an einer Befestigungsstruktur abstützen, die Bestandteil eines den Führungsholm umgebenden, sich bis über die Außenseite des Wulstes erstreckenden Rings ist und den Ring in dem Faltenbalg abgewandter Längsrichtung verriegelt. Dies führt zu einem besonders dichten Sitz. Außerdem sollte das freie Ende der nicht erfindungsgemäßen Dichtlippe nach außen gerichtet sein. Die Dichtlippe wird dann beim Einführen des Wulstes in die Ringnut von Beginn des Einführens an automatisch in Richtung zu dem Wulst gedrückt, so dass das Einsetzen des Wulstes in die Ringnut einfach und ohne größeren Widerstand erfolgen kann.

Gemäß einer anderen nicht erfindungsgemäßen Ausgestaltung des Faltenbalgs ist an einer dem Faltenbalg abgewandten Stirnfläche des Wulstes ein Vorsprung und ein Spalt ausgebildet, die die Dichtlippe zumindest teilweise überdeckt, wobei die Dichtlippe relativ zu dem Vorsprung federelastisch ausgebildet ist. Die elastische Dichtlippe kann somit beim Einführen des Wulstes in die Ringnut in Richtung zu dem Vorsprung zurückfedern, wodurch die Dichtlippe das Einführen des Wulstes in die Ringnut nicht erschwert. Ist der Wulst in der Ringnut positioniert, federt die Dichtlippe zurück, wodurch sie sich an den stufenförmigen Querschnitt der Ringnut anlegt und hier besonders gut abdichtet. Durch den an dem Wulst ausgebildeten Vorsprung kann außerdem der Bewegungsweg der Dichtlippe relativ zu dem Wulst definiert begrenzt werden.

Gemäß einer weiteren nicht erfindungsgemäßen Ausgestaltung ist der Wulst an seiner Innenfläche mit mindestens zwei parallel zueinander über den inneren Wulstumfang verlaufenden Aussparungen versehen. Der Wulst weist daher an seiner Innenfläche einen Querschnitt ähnlich einer Welle auf. Dadurch kann die Zahl der definierten Kontaktlinien zwischen Wulst und Nutboden erhöht werden. Durch diese Erhöhung der Anzahl der definierten Kontaktlinien wird die Dichtwirkung des Wulstes hin zu dem Führungsholm erhöht, und außerdem auch der Sitz des Wulstes in der Ringnut des Führungsholms verbessert.

Zwei Ausführungsbeispiele der Erfindung werden nachfolgend anhand der Zeichnungen erläutert. Darin zeigen:
- Fig. 1: in perspektivischer, zum Teil geschnittener Ansicht eine Fahrzeugscheibenbremse in schwimmender Bauart des Bremssattels, wobei die Bremsscheibe und die Bremsbeläge der Scheibenbremse weggelassen sind;
- Fig. 2: in gegenüber Fig. 1 vergrößerter Darstellung einen an dem Bremsträger der Scheibenbremse befestigten Führungsholm;
- Fig. 2a: eine vergrößerte Darstellung des in Fig. 2 mit Ila bezeichneten Details;
- Fig. 2b: eine vergrößerte Darstellung des in Fig. 2 mit Ilb bezeichneten Details;
- Fig. 2c: eine ähnliche Darstellung wie in Fig. 2a, b, jedoch mit einer alternativen Ausgestaltung der Dichtlippe des nicht erfindungsgemäßen Faltenbalgs;
- Fig. 3: in perspektivischer Wiedergabe einen teilweise geschnittenen und nicht erfindungsgemäßen Faltenbalg, und
- Fig. 4: in einer Schnittdarstellung eine weitere Ausführungsform der Bremssattelführung einschließlich des Führungsholms, des nicht erfindungsgemäßen Faltenbalgs und des den Faltenbalg sichernden Rings.

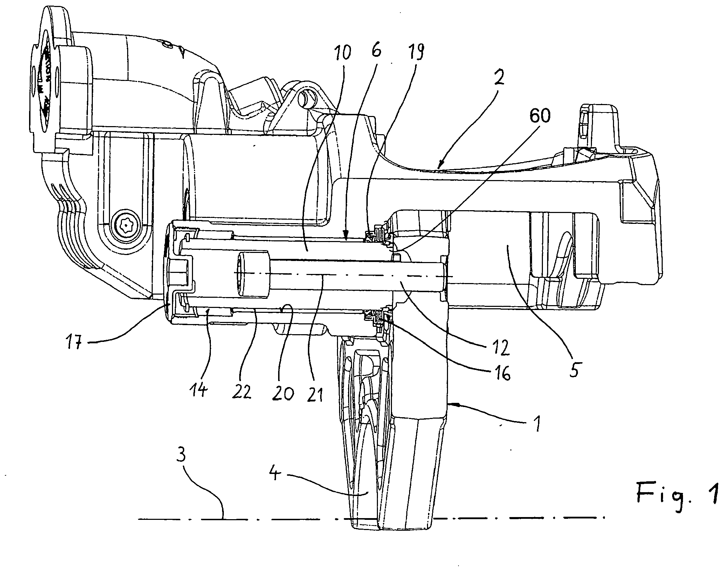

Die in Fig. 1 wiedergegebene Scheibenbremse für ein Fahrzeug und insbesondere für einen Schwerlast-Nutzfahrzeuganhänger besteht in erster Linie aus einem an der Fahrzeugachse befestigten Bremsträger 1 und einem schwimmend, d. h. gleitbeweglich an dem Bremsträger 1 befestigten Bremssattel 2. Andere, ebenfalls wichtige Bauteile der Scheibenbremse sind nicht wiedergegeben, da diese im Rahmen der Erläuterung der Erfindung weniger bedeutsam sind. Dies gilt etwa für die um die Drehachse 3 drehbare Bremsscheibe, und für die in einem Belagschacht 5 angeordneten Bremsbeläge der Scheibenbremse.

Der Bremsträger 1 ist ein so genannter rahmenloser Bremsträger. Er ist flach gestaltet und umgreift oder übergreift die Bremsscheibe nicht. Er erstreckt sich parallel zur Bremsscheibe sowie quer zu der Drehachse 3 der Bremsscheibe und er ist mittels einer maulartigen Öffnung 4 fest an einem Fahrwerksteil des Fahrzeugs befestigbar, beispielsweise an einem Achskörper, von dem nur dessen Mittellinie 3 bezeichnet ist. An seinem Ende ist der Achskörper mit der Lagerung für das Fahrzeugrad und die Bremsscheibe versehen, die sich daher beide um die mit der Mittellinie 3 zusammenfallende Drehachse drehen.

Der Bremsträger 1 ist, dem Achskörper abgewandt, mit einer Ausnehmung versehen, in welcher mit geringem Spiel der fahrzeug innere der beiden Bremsbeläge sitzt, so dass die Bremsmomente von diesem Bremsbelag unmittelbar auf den Bremsträger 1 abgeführt werden. Der äußere der beiden Bremsbeläge hingegen sitzt in dem Bremssattel 2, welcher zu diesem Zweck mit Abstützflächen versehen ist, welche die Bremsmomente des äußeren Bremsbelags aufnehmen.

Die so an dem schwimmend gelagerten Bremssattel 2 wirkenden Brems- bzw. Bremsreaktionsmomente müssen auf den fahrwerksfesten Bremsträger 1 übertragen werden. Zu diesem Zweck ist der Bremssattel 2 über zwei Gleitlager 6 in Längsrichtung beweglich an dem Bremsträger 1 angeordnet. Hierbei ist das eine, auf der Zeichnung dargestellte Lager 6 als Festlager ausgebildet, und das andere Lager als Loslager. Als Festlager wird üblicherweise und auch hier eine präzise arbeitende Axialführung bezeichnet, welche im Bremsbetrieb den Bremssattel 2 möglichst reibungsarm führt, um so die Bremsbeläge gegen die rotierende Bremsscheibe zu bewegen.

Seitens des Bremsträgers 1 gehört zu der Axialführung 6 ein länglicher Führungsholm 10. Dieser ist an seinem bremsträgerseitigen, in Fig. 1 rechts liegenden Ende 60 mittels einer Schraube 12 starr gegen den Bremsträger 1 befestigt. Die glatt bearbeitete, zylindrische Außenseite 14 des Führungsholms 10 bildet das erste Element der Axialführung 6.

Seitens des Bremssattels 2 gehört zu der Axialführung 6 eine in eine Bohrung 20 des Bremssattels 2 eingesetzte Lagerbuchse 22. Die zylindrische Bohrung 20 ist unmittelbar im Material des Bremssattels 2 ausgebildet. Die Lagerbuchse 22 ist vorzugsweise eine dauergeschmierte Gleitlagerbuchse, deren zylindrische Innenwandung das zweite Element der Axialführung 6 bildet.

Um ein Eindringen von Staub und Schmutz in den Bereich dieser Führung zu verhindern, sind zu beiden Enden der Führung hin Dichtungen vorgesehen. Zum Bremsträger 1 hin ist zur Abdichtung ein Faltenbalg 16 vorgesehen, dessen Einzelheiten im Folgenden noch näher erläutert werden. Das andere, also das dem Bremsträger 1 abgewandte Ende der Führung ist durch eine Kappe 17 abgedichtet, die auf eine dort vorhandene Öffnung in dem Bremssattel 2 aufgesteckt ist.

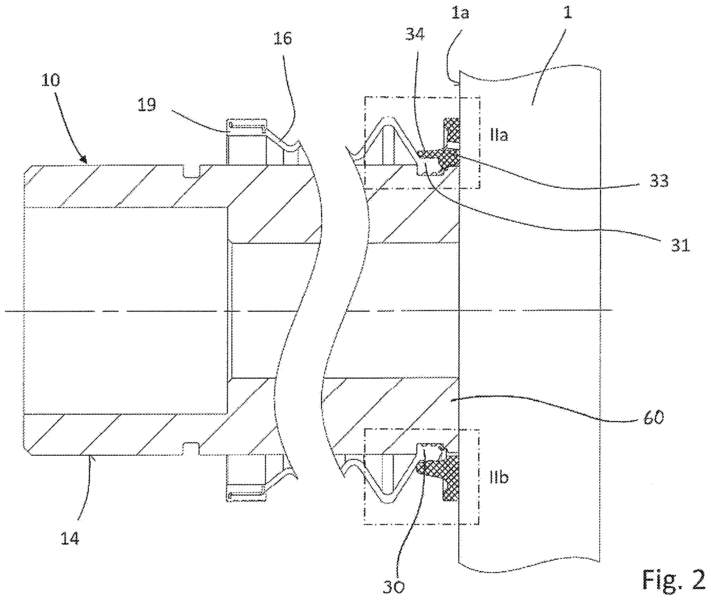

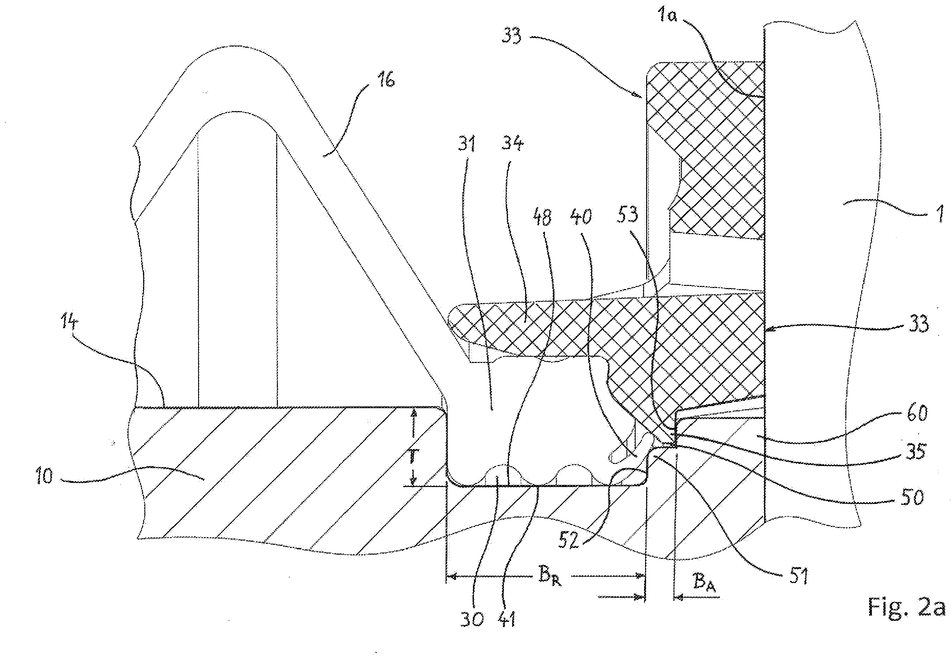

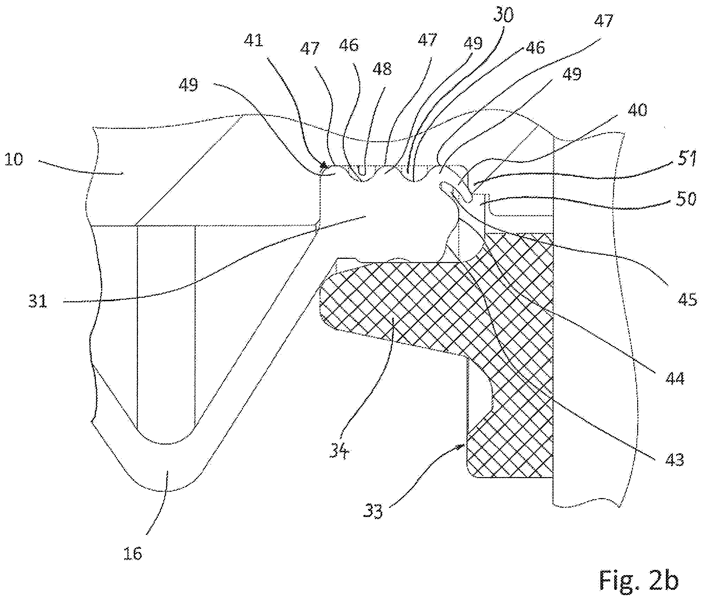

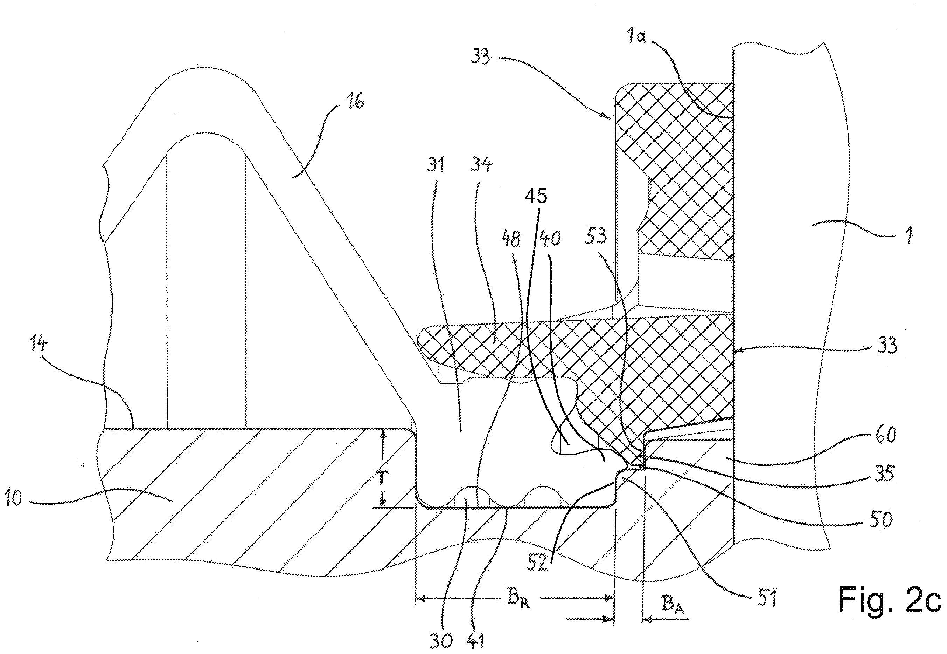

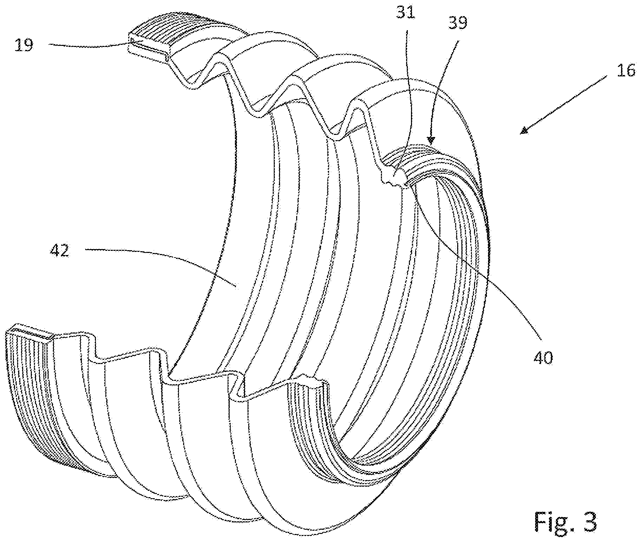

Anhand der Figuren 2 und 3 werden im Folgenden Einzelheiten der Abdichtung zu dem Bremsträger 1 hin beschrieben.

Der den Führungsholm 10 auf einer Teillänge umgebende Faltenbalg 16 ist an seinem auf der Zeichnung linken, d. h. dem Bremsträger 1 abgewandten Ende mit einem dortigen Dichtabschnitt 19 gegenüber dem Bremssattel 2 abgedichtet. Hierzu sitzt der Dichtabschnitt 19, wie Fig. 1 zeigt, in einer entsprechend gestalteten, den Führungsholm 10 umgebenden Ausdrehung des Bremssattels 2.

Der andere, d. h. der dem Bremsträger 1 zugewandte Endabschnitt 39 des Faltenbalgs 16 ist nahe des Bremsträgers 1 direkt an dem Führungsholm 10 befestigt. Zu diesem Zweck ist der Führungsholm 10 in seiner im Übrigen zylindrischen Außenseite 14 nahe zu der Außenseite 1a des Bremsträgers 1 mit einer umlaufenden Ringnut 30 versehen. In dem von der Ringnut 30 gebildeten, im Wesentlichen rechteckigen Querschnitt sitzt ein Wulst 31, welcher den dem Bremsträger 1 zugewandten Endabschnitt des Faltenbalgs 16 bildet. Der Wulst 31 hat einen über seinen Umfang gleich bleibenden, in etwa rechteckigen Querschnitt, und er ist einstückiger Bestandteil des aus elastischem Material und vorzugsweise aus Gummi bestehenden Faltenbalgs 16. Er befindet sich überwiegend in und zu einem kleinen Teil außerhalb des Querschnitts der Ringnut 30.

Der Wulst 31 weist eine an dem Wulst 31 angeformte Dichtlippe 40 auf, welche, wie aus Fig. 2 und Fig. 3 zu erkennen ist, umlaufend an dem Wulst 31 angeformt ist. Die Dichtlippe 40 ist einstückig an dem Wulst 31 angeformt, so dass die Dichtlippe 40 aus demselben elastischen Material besteht. Die Dichtlippe 40 steht zumindest mit ihrem freien Ende in Längsrichtung des Faltenbalgs 16 vor, so dass durch die Dichtlippe 40 die Breite des Wulstes 31 vergrößert ist. Angeformt ist der Fuß der Dichtlippe 40 an der zur Mittelachse des Führungsholms 10 weisenden Innenfläche 41 des Wulstes 31 (Fig. 2a, b). Ausgehend von dieser Innenfläche 41 erstreckt sich die Dichtlippe 40 mit ihrem freien Ende nach außen, wobei sie sich in einem im Wesentlichen 45°-Winkel zu der Innenfläche 41 nach außen erstreckt.

Auch kann die Dichtlippe 40 an einer dem Faltenbalg 16 abgewandten Stirnfläche 43 des Wulstes 31 angeformt sein (Fig. 2c). Demgemäß stützt sich die Dichtlippe 40 an dem Nutboden 48 der Ringnut 30, an einer axial versetzt zu dem Nutboden 48 angeordneten Einsenkung 50 und an einer Stufe 51 zwischen Ringnut 30 und Einsenkung 50 ab. Zusätzlich stützt sich die Dichtlippe 35 an einer Befestigungsstruktur 35 ab, die Bestandteil eines den Führungsholm 10 umgebenden, sich bis über die Außenseite des Wulstes 31 erstreckenden Rings 33 ist und den Ring 33 in dem Faltenbalg 16 abgewandter Längsrichtung verriegelt. Ausgehend von der Stirnfläche 43 erstreckt sich die Dichtlippe 40 mit ihrem freien Ende ebenfalls nach außen.

An der dem Bremsträger 1 zugewandten Stirnfläche 43 des Wulstes 31 ist umlaufend ein Vorsprung 44 in Form einer Auswölbung und ein Spalt 45 ausgebildet. Der Vorsprung 44 ist im Wesentlichen auf der Mitte der Höhe des Wulstes 31 ausgebildet, kann aber auch an den Endbereichen der Stirnfläche 43 des Wulstes 31 ausgebildet sein. Die Dichtlippe 40 überlappt den Vorsprung 44 bzw. den Spalt 45 über einen Teilbereich des Vorsprungs 44 bzw. des Spalts 43. Der Spalt 43 bzw. ein Freiraum ist zwischen dem Vorsprung 44 und der Dichtlippe 40 ausgebildet, so dass die Dichtlippe 40 zu dem Vorsprung 44 hin zurückfedern kann. Die Dichtlippe 40 ist somit elastisch in Richtung zu dem Vorsprung 44 und damit in Richtung zu der Stirnfläche 43 beweglich.

An der Innenfläche 41 des Wulstes 31 sind zwei parallel zueinander verlaufende nutförmige Aussparungen 46 ausgebildet, die sich über den gesamten Umfang des Faltenbalgs 16 erstrecken. Durch die Aussparungen 46 weist die Innenfläche 41 eine Wellenform auf. Durch die Wellenform kann die Anzahl der definierten Kontaktlinien 47 der Innenfläche 41 des Wulstes 31 mit dem Nutboden 48 der Ringnut 30 erhöht werden, da die benachbart zu den Aussparungen 46 ausgebildeten Auswölbungen 49 linienförmig an dem Nutboden 48 der Ringnut 30 anliegen.

Im Bereich des Fußes der Dichtlippe 40 weist die Innenfläche 41 ebenfalls eine Auswölbung 49 auf, so dass auch in diesem Anbindungsbereich eine Kontaktlinie 47 der Innenfläche 41 an den Nutboden 48 ausgebildet ist.

Die Ringnut 30 weist den Nutboden 48 und sich gegenüberliegende, rechtwinklig zu dem Nutboden 48 angeordnete Seitenwände auf. Die von dem Bremsträger 1 weiter entfernte Nutwandung erstreckt sich vom Nutboden 48 aus radial bis nach außen zu der zylindrischen Außenseite des Führungsholms 10. Diese Nutwandung hat, ebenso wie die Ringnut 30 selbst, gemäß Fig. 2a die Höhe T.

Die näher an dem Bremsträger 1 angeordnete Nutwandung ist hingegen zweigeteilt, da sich an die Ringnut 30 in Axialrichtung eine Einsenkung 50 kleineren Querschnitts anschließt. Dabei bildet die Einsenkung 50 zusammen mit der Ringnut 30 einen gemeinsamen Nutraum.

Dies wird erreicht, indem eine umlaufende Stufe bzw. ein umlaufender Absatz 51 vorhanden ist. Es ergeben sich so zwei in Längsrichtung versetzt zueinander angeordnete Wandabschnitte 52 und 53. An dem tiefer gelegenen Wandabschnitt 52 und/oder an der Kante der Stufe 51 liegt die Dichtlippe 40 an, wie insbesondere aus Fig. 2a und 2b zu erkennen ist.

Bei der in Fig. 2, 2a, 2b gezeigten Gestaltung des Nutquerschnitts weist der stufenförmige Absatz 51 eine radiale Höhe H auf, welche nur ungefähr 1/2 der Tiefe T der Ringnut 30 beträgt. Die in Längsrichtung des Führungsholms 10 betrachtete Breite B_{A} des Absatzes 51 und damit die Breite der Einsenkung 50 ist wesentlich kleiner, als die Breite B_{R} des Nutbodens 48 der Ringnut 30.

Um den am Nutboden 48 abgestützten Wulst 31 in der Ringnut 30 zu sichern und ihn zugleich gegen die Ringnut 30 abzudichten, ist ein zusätzlicher Ring 33 vorhanden. Dieser übt einen nach innen, also zur Mittelachse des Führungsholms 10 hin gerichteten Druck auf den Wulst 31 aus, und hält diesen so in der Ringnut 30.

Der Ring 33 setzt sich in Umfangsrichtung aus drei größeren Umfangssegmenten und drei kleineren Umfangssegmenten zusammen, wobei sich größere und kleinere Segmente jeweils abwechseln. Der Ring 33 ist mit einem umlaufenden Längsabschnitt 34 versehen, mit dem sich der Ring 33 außen über den Wulst 31 erstreckt und außen auf dem Wulst 31 abstützt. Auf diese Weise wird der Wulst 31 zur Erzielung einer ausreichenden Abdichtung auf seinem gesamten Umfang in die Ringnut 30 hinein gedrückt. Da der Wulst 31 auf seinem Gesamtumfang umgriffen wird, wird eine gute Abdichtung des Faltenbalgs 16 gegenüber dem Führungsholm 10 erreicht.

Auf den anderen, in Umfangsrichtung deutlich kürzeren Segmenten ist der Ring 33 innen jeweils mit einer Befestigungsstruktur 35 in Gestalt einer federnd nachgiebigen Nase versehen. Jede dieser Befestigungsstrukturen 35 reicht nach radial innen bis in den Querschnitt der der Ringnut 30 benachbarten Einsenkung 50 hinein, und arretiert so den Ring 33 an dem Führungsholm 10, wodurch der Ring in dem Faltenbalg 16 abgewandter Längsrichtung gegenüber dem Führungsholm verriegelt ist. Zusätzlich kann sich der Ring 33 unmittelbar gegen den Bremsträger 1 abstützen.

Die Fig. 2a zeigt anhand des Schnitts durch eines der kleineren Umfangssegmente, dass jede Befestigungsstruktur 35 eine nach innen vorspringende Nase des Rings 33 ist, welche sich gegen die der Ringnut 30 zugewandte Wandung 53 der Einsenkung 50 abstützt. Durch diese Verriegelung kann der Ring 33 nicht nach rechts in Fig. 2a ausweichen, und zwar ungeachtet seiner eventuellen Abstützung an dem Bremsträger 1. Die so erzielte Lagesicherung des Rings 33 in Längsrichtung ist, wie beschrieben, vor allem bei der Montage des Bremssattels von Vorteil.

Da der Nutraum in seiner Gesamtheit von stufenförmigem Querschnitt ist, mit der sich von dem Nutboden 48 bis zu der Stufe 51 erstreckenden unteren Nutwandung 52 und der sich von der Stufe 51 bis zur zylindrischen Außenseite des Führungsholms 10 erstreckenden oberen Wandung 53, liegt die Befestigungsstruktur 35 des Rings 33 nur an dieser oberen Wandung 53 an.

Durch die Stufe 51 wird eine definierte Trennung der Anlage des Wulstes 31, insbesondere der Dichtlippe 40 des Wulstes 31, und der Anlage des Rings 33, insbesondere der Befestigungsstruktur 35 des Rings, erreicht. Denn die Stufe 51 führt zu einer Aufteilung in die untere bzw. innere Nutwandung 52 und die dazu in Längsrichtung versetzt angeordnete obere bzw. äußere Nutwandung 53, wobei sich an der Wandung 52 nur der Wulst 31 des Faltenbalgs 16, und an der Wandung 53 nur der Ring 33 in Längsrichtung abstützt. Diese Maßnahmen tragen dazu bei, die Positionierung des Faltenbalgs 16 und/oder des Rings 33 an dem Führungsholm 10 weiter und auch dauerhaft zu verbessern.

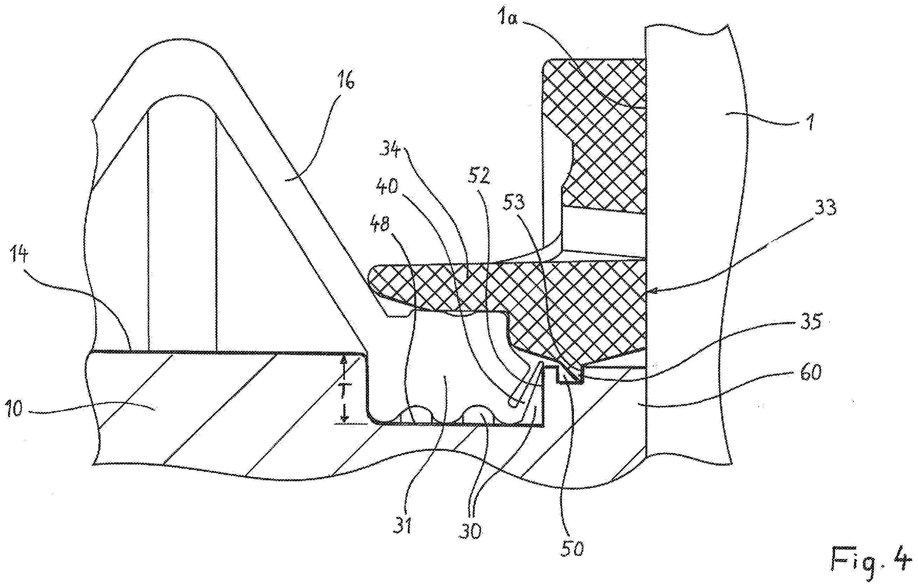

In Fig. 4 ist eine zweite Ausführungsform wiedergegeben. Bei dieser ist die Einsenkung 50 nicht Teil eines gemeinsamen Nutraums mit der den Wulst 31 aufnehmenden Ringnut 30. Stattdessen ist die Einsenkung 50 nicht nur axial versetzt, sondern von der Ringnut 30 räumlich getrennt an dem Führungsholm 10 ausgebildet. Dazu ist der Führungsholm mit einer separaten zweiten Nut 50 versehen, die hier den Querschnitt einer Rechtecknut hat. Ebenso aber kann die Einsenkung eine Nut 50 mit V-förmigem Querschnitt sein, wobei deren zu der Ringnut 30 hin gerichtete Wandung 53, um einen bestmöglichen Formschluss zu erreichen, senkrecht zu der zylindrischen Außenfläche des Führungsholms 10 angeordnet sein sollte, wie dies auch bei der im Querschnitt rechteckigen Einsenkung 50 gemäß Fig. 4 der Fall ist.

Zwischen der Ringnut 30 und der räumlich getrennten Einsenkung 50 kann der Führungsholm 10 den normalen zylindrischen Durchmesser seiner Außenseite 14 aufweisen. Jedoch ist hier auch ein anderer, geringerer Durchmesser denkbar.

Bei der Ausführungsform nach Fig. 4 wird also eine strikte räumliche Trennung der Funktionsbereiche erzielt. In der Ringnut 30 sitzt der Wulst 31 des Faltenbalgs 16, zudem dient die Ringnut 30 auch ausschließlich der Aufnahme dieses Wulstes. Hingegen dient die ebenfalls nutförmige Einsenkung 50 nur dazu, eine der Ringnut 30 zugewandte Wandung 53 bereitzustellen, an der sich die Befestigungsstruktur 35 des Rings 33 in Längsrichtung abstützen kann. Dabei befindet sich die Einsenkung 50 zwischen der Ringnut 30 und dem zu der Ringnut 30 näher gelegenen Ende 60 der beiden Enden des Führungsholms 10.

### Bezugszeichenliste

- 1: Bremsträger
- 1a: Außenseite des Bremsträgers
- 2: Bremssattel
- 3: Drehachse, Mittellinienachskörper
- 4: Öffnung
- 5: Belagschacht
- 6: Gleitlager, Axialführung
- 10: Führungsholm
- 12: Schraube
- 14: Außenseite
- 16: Faltenbalg
- 17: Kappe
- 19: Dichtabschnitt
- 20: Bohrung
- 21: Mittelachse
- 22: Lagerbuchse
- 30: Ringnut
- 31: Wulst
- 33: Ring
- 34: Längsabschnitt
- 35: Struktur
- 39: Endabschnitt
- 40: Dichtlippe
- 41: Innenfläche
- 42: Innenraum
- 43: Stirnfläche
- 44: Vorsprung
- 45: Spalt
- 46: Aussparung
- 47: Kontaktlinien
- 48: Nutboden
- 49: Auswölbung
- 50: Einsenkung, Nut
- 51: Stufe, Absatz
- 52: Wandung
- 53: Wandung
- 60: Ende des Führungsholms

- H: Höhe des Absatzes
- B_{A}: Breite des Absatzes
- B_{R}: Breite der Ringnut
- T: Tiefe der Ringnut

## Patentansprüche

1. Bremssattelführung für eine Scheibenbremse, mit einem aus einer Bohrung und einem darin längsbeweglichen Führungsholm (10) zusammengesetzten Gleitlager (6), mit einem zum Schutz des Gleitlagers (6) den Führungsholm (10) auf einer Teillänge umgebenden Faltenbalg (16), der zu seiner Festlegung an dem Führungsholm (10) mit einem Wulst (31) versehen ist, der an einem Nutboden (48) einer Ringnut (30) abgestützt ist, mit der der Führungsholm (10) versehen ist, und mit einem den Führungsholm (10) umgebenden Ring (33), der sich in axialer Richtung bis über die Außenseite des Wulstes (31) erstreckt und mit einer Befestigungsstruktur (35) versehen ist, welche den Ring (33) in dem Faltenbalg (16) abgewandter Längsrichtung verriegelt, **gekennzeichnet durch** eine Einsenkung (50), mit der der Führungsholm (10) axial versetzt zu dem Nutboden (48) versehen ist, wobei die Befestigungsstruktur (35) gegen eine der Ringnut (30) zugewandte Wandung (53) der Einsenkung (50) anliegt.

2. Bremssattelführung nach Anspruch 1, **dadurch gekennzeichnet, dass** die Einsenkung (50) eine sich über den Umfang des Führungsholms (10) erstreckende Nut ist, deren Tiefe geringer ist als die Tiefe (T) der Ringnut (30) im Bereich des Nutbodens (48).

3. Bremssattelführung nach Anspruch 1 oder Anspruch 2, **dadurch gekennzeichnet, dass** die Einsenkung (50) räumlich getrennt von der Ringnut (30) an dem Führungsholm (10) ausgebildet ist.

4. Bremssattelführung nach Anspruch 1 oder Anspruch 2, **dadurch gekennzeichnet, dass** die Ringnut (30) zusammen mit der Einsenkung (50) einen durch eine Stufe (51) unterteilten, gemeinsamen Nutraum bildet, wobei sich die Wandung (53) von der Stufe (51) aus nach außen erstreckt, und wobei an der Stufe (51) der Wulst (31) des Faltenbalgs (16), und an der Wandung (53) die Befestigungsstruktur (35) des Rings (33) anliegt.

5. Bremssattelführung nach Anspruch 4, **dadurch gekennzeichnet, dass** die radiale Höhe (H) der Stufe (51) zwischen 1/3 und 2/3 der Tiefe (T) der Ringnut (30) im Bereich des Nutbodens (48) beträgt.

6. Bremssattelführung nach Anspruch 4 oder 5, **dadurch gekennzeichnet, dass** der Nutboden (48) in axialer Richtung eine Breite (BR) aufweist, welche fünffach bis zehnfach so groß wie die sich in axialer Richtung erstreckende Breite (BA) der Stufe (51) ist.

7. Führungsholm (10) für eine Bremssattelführung einer Scheibenbremse, mit einer an der Außenfläche des Führungsholms (10) ausgebildeten Ringnut (30), deren Nutboden (48) einen Sitz für den Wulst eines den Führungsholm umgebenden Faltenbalgs bildet, und mit einer Einsenkung (50), mit der der Führungsholm (10) axial versetzt zu dem Nutboden (48) versehen ist, wobei die Einsenkung (50) mit einer der Ringnut (30) zugewandten Wandung (53) zur Anlage einer Befestigungsstruktur (35) versehen ist, **dadurch gekennzeichnet, dass** die Ringnut (30) zusammen mit der Einsenkung (50) einer durch eine Stufe (51) unterteilten, gemeinsamen Nutraum bildet, wobei sich die Wandung (53) von der Stufe (51) aus nach außen erstreckt.

8. Führungsholm nach Anspruch 7, **dadurch gekennzeichnet, dass** sich die Einsenkung (50) zwischen der Ringnut (30) und dem näher gelegenen Ende (60) des Führungsholms (10) befindet.

9. Führungsholm nach Anspruch 7 oder 8, **dadurch gekennzeichnet, dass** die Einsenkung (50) eine sich über den Umfang des Führungsholms (10) erstreckende Nut ist, deren Tiefe geringer ist als die Tiefe (T) der Ringnut (30) im Bereich des Nutbodens (48).

10. Führungsholm nach Anspruch 7, 8 oder 9, **dadurch gekennzeichnet, dass** die Einsenkung (50) räumlich getrennt von der Ringnut (30) an dem Führungsholm (10) ausgebildet ist.

11. Führungsholm nach Anspruch 7, **dadurch gekennzeichnet, dass** die radiale Höhe (H) der Stufe (51) zwischen 1/3 und 2/3 der Tiefe (T) der Ringnut (30) im Bereich des Nutbodens (48) beträgt.

12. Führungsholm nach Anspruch 7, **dadurch gekennzeichnet, dass** der Nutboden (48) in axialer Richtung eine Breite (BR) aufweist, welche fünffach bis zehnfach so groß wie die sich in axialer Richtung erstreckende Breite (fü) der Stufe (51) ist.

13. Führungsholm nach Anspruch 7, **dadurch gekennzeichnet, dass** die Einsenkung (50) räumlich getrennt von der Ringnut (30) an dem Führungsholm (10) ausgebildet ist, und wobei im montierten Zustand an der Stufe (51) der Wulst (31) des Faltenbalgs (16) und an der Wandung (53) die Befestigungsstruktur (35) des Rings (33) anliegt.

14. Führungsholm nach Anspruch 13, **dadurch gekennzeichnet, dass** sich die Einsenkung (50) zwischen der Ringnut (30) und dem näher gelegenen Ende (60) des Führungsholms (10) befindet.

15. Führungsholm nach Anspruch 13 oder 14, **dadurch gekennzeichnet, dass** die Einsenkung (50) eine sich über den Umfang des Führungsholms (10) erstreckende Nut ist, deren Tiefe geringer ist als die Tiefe (T) der Ringnut (30) im Bereich des Nutbodens (48).

## Claims

1. Brake caliper guide for a disk brake, comprising a sliding bearing (6) which is assembled from a bore and a guide bar (10) which is movable longitudinally therein, comprising a bellows (16) which surrounds the guide bar (10) on a partial length for the purpose of protecting the sliding bearing (6) and is provided with a bead (31) so that it can be fixed to the guide bar (10), which bead is supported on a groove base (48) of an annular groove (30) with which the guide bar (10) is provided, and comprising a ring (33) which surrounds the guide bar (10), extends in the axial direction up to the outer face of the bead (31) and is provided with a fastening structure (35) which locks the ring (33) in the longitudinal direction facing away from the bellows (16), **characterized by** a depression (50) with which the guide bar (10) is provided axially offset with respect to the groove base (48), the fastening structure (35) resting against a wall (53) of the depression (50), which wall faces the annular groove (30).

2. Brake caliper guide according to claim 1, **characterized in that** the depression (50) is a groove which extends over the periphery of the guide bar (10), the depth of which groove is smaller than the depth (T) of the annular groove (30) in the region of the groove base (48).

3. Brake caliper guide according to claim 1 or claim 2, **characterized in that** the depression (50) is designed to be spatially separated from the annular groove (30) on the guide bar (10).

4. Brake caliper guide according to claim 1 or claim 2, **characterized in that** the annular groove (30) together with the depression (50) forms a common groove space divided by a step (51), the wall (53) extending outwardly from the step (51), and the bead (31) of the bellows (16) resting against the step (51), and the fastening structure (35) of the ring (33) resting against the wall (53).

5. Brake caliper guide according to claim 4, **characterized in that** the radial height (H) of the step (51) is between 1/3 and 2/3 of the depth (T) of the annular groove (30) in the region of the groove base (48).

6. Brake caliper guide according to claim 4 or claim 5, **characterized in that** the groove base (48) has a width (BR) in the axial direction, which width is five to ten times as large as the width (BA) of the step (51) which extends in the axial direction.

7. Guide bar (10) for a brake caliper guide of a disk brake, comprising an annular groove (30) formed on the outer surface of the guide bar (10), the groove base (48) of which groove forms a seat for the bead of a bellows surrounding the guide bar, and comprising a depression (50), with which the guide bar (10) is provided axially offset with respect to the groove base (48), the depression (50) being provided with a wall (53) facing the annular groove (30) for contacting a fastening structure (35), **characterized in that** the annular groove (30) together with the depression (50) forms a common groove space divided by a step (51), the wall (53) extending outwardly from the step (51).

8. Guide bar according to claim 7, **characterized in that** the depression (50) is located between the annular groove (30) and the closer end (60) of the guide bar (10).

9. Guide bar according to claim 7 or claim 8, **characterized in that** the depression (50) is a groove which extends over the periphery of the guide bar (10), the depth of which groove is smaller than the depth (T) of the annular groove (30) in the region of the groove base (48).

10. Guide bar according to claims 7, 8 or 9, **characterized in that** the depression (50) is designed to be spatially separated from the annular groove (30) on the guide bar (10).

11. Guide bar according to claim 7, **characterized in that** the radial height (H) of the step (51) is between 1/3 and 2/3 of the depth (T) of the annular groove (30) in the region of the groove base (48).

12. Guide bar according to claim 7, **characterized in that** the groove base (48) has a width (BR) in the axial direction, which width is five to ten times as large as the width (fü) of the step (51) which extends in the axial direction.

13. Guide bar according to claim 7, **characterized in that** the depression (50) is designed spatially separated from the annular groove (30) on the guide bar (10), and, in the mounted state, the bead (31) of the bellows (16) resting against the step (51) and the fastening structure (35) of the ring (33) resting against the wall (53).

14. Guide bar according to claim 13, **characterized in that** the depression (50) is located between the annular groove (30) and the closer end (60) of the guide bar (10).

15. Guide bar according to claim 13 or claim 14, **characterized in that** the depression (50) is a groove which extends over the periphery of the guide bar (10), the depth of which groove is smaller than the depth (T) of the annular groove (30) in the region of the groove base (48).

## Revendications

1. Guidage d'étrier de frein pour un frein à disque, avec un palier lisse (6) composé d'un trou et d'un longeron de guidage (10) mobile longitudinalement dans celui-ci, avec un soufflet (16) entourant le longeron de guidage (10) sur une longueur partielle pour la protection du palier lisse (6), qui pour sa fixation sur le longeron de guidage (10) est pourvu d'un bourrelet (31), qui est en appui sur un fond de rainure (48) d'une rainure annulaire (30), dont le longeron de guidage (10) est pourvu, et avec une bague (33) entourant le longeron de guidage (10), qui s'étend dans la direction axiale jusque sur la face extérieure du bourrelet (31) et est pourvue d'une structure de fixation (35), laquelle verrouille la bague (33) dans la direction longitudinale opposée au soufflet (16), **caractérisé par** un renfoncement (50), dont le longeron de guidage (10) est pourvu de manière axialement décalée par rapport au fond de rainure (48), dans lequel la structure de fixation (35) s'applique contre une paroi (53) du renfoncement (50) tournée vers la rainure annulaire (30).

2. Guidage d'étrier de frein selon la revendication 1, **caractérisé en ce que** le renfoncement (50) est une rainure s'étendant sur toute la périphérie du longeron de guidage (10), dont la profondeur est inférieure à la profondeur (T) de la rainure annulaire (30) dans la zone du fond de rainure (48) .

3. Guidage d'étrier de frein selon la revendication 1 ou la revendication 2, **caractérisé en ce que** le renfoncement (50) est réalisé de manière séparée dans l'espace de la rainure annulaire (30) sur le longeron de guidage (10).

4. Guidage d'étrier de frein selon la revendication 1 ou la revendication 2, **caractérisé en ce que** la rainure annulaire (30) forme conjointement avec le renfoncement (50) un espace de rainure commun divisé par un étage (51), dans lequel la paroi (53) s'étend à partir de l'étage (51) vers l'extérieur, et dans lequel le bourrelet (31) du soufflet (16) s'applique sur l'étage (51), et la structure de fixation (35) de la bague (33) sur la paroi (53).

5. Guidage d'étrier de frein selon la revendication 4, **caractérisé en ce que** la hauteur radiale (H) de l'étage (51) est comprise entre 1/3 et 2/3 de la profondeur (T) de la rainure annulaire (30) dans la zone du fond de rainure (48).

6. Guidage d'étrier de frein selon la revendication 4 ou 5, **caractérisé en ce que** le fond de rainure (48) présente dans la direction axiale une largeur (BR), laquelle est cinq fois à dix fois deux fois plus grande que la largeur (BA) de l'étage (51) s'étendant dans la direction axiale.

7. Longeron de guidage (10) pour un guidage d'étrier de frein d'un frein à disque, avec une rainure annulaire (30) réalisée sur la surface extérieure du longeron de guidage (10), dont le fond de rainure (48) forme un siège pour le bourrelet d'un soufflet entourant le longeron de guidage, et avec un renfoncement (50), dont le longeron de guidage (10) est pourvu de manière axialement décalée par rapport au fond de rainure (48),
dans lequel le renfoncement (50) est pourvu d'une paroi (53) tournée vers la rainure annulaire (30) pour l'appui contre une structure de fixation (35),
**caractérisé en ce que** la rainure annulaire (30) forme conjointement avec le renfoncement (50) un espace de rainure commun, divisé par un étage (51), dans lequel la paroi (53) s'étend à partir de l'étage (51) vers l'extérieur.

8. Longeron de guidage selon la revendication 7, **caractérisé en ce que** le renfoncement (50) se trouve entre la rainure annulaire (30) et l'extrémité située plus près (60) du longeron de guidage (10).

9. Longeron de guidage selon la revendication 7 ou 8, **caractérisé en ce que** le renfoncement (50) est une rainure s'étendant sur toute la périphérie du longeron de guidage (10), dont la profondeur est inférieure à la profondeur (T) de la rainure annulaire (30) dans la zone du fond de rainure (48) .

10. Longeron de guidage selon la revendication 7, 8 ou 9, **caractérisé en ce que** le renfoncement (50) est réalisé de manière séparée dans l'espace de la rainure annulaire (30) sur le longeron de guidage (10).

11. Longeron de guidage selon la revendication 7, **caractérisé en ce que** la hauteur radiale (H) de l'étage (51) est comprise entre 1/3 et 2/3 de la profondeur (T) de la rainure annulaire (30) dans la zone du fond de rainure (48).

12. Longeron de guidage selon la revendication 7, **caractérisé en ce que** le fond de rainure (48) présente dans la direction axiale une largeur (BR), laquelle est cinq fois à dix fois plus grande que la largeur (fü) de l'étage (51) s'étendant dans la direction axiale.

13. Longeron de guidage selon la revendication 7, **caractérisé en ce que** le renfoncement (50) est réalisé de manière séparée dans l'espace de la rainure annulaire (30) sur le longeron de guidage (10),
et dans lequel dans l'état monté le bourrelet (31) du soufflet (16) s'applique sur l'étage (51) et la structure de fixation (35) de la bague (33) sur la paroi (53).

14. Longeron de guidage selon la revendication 13, **caractérisé en ce que** le renfoncement (50) se trouve entre la rainure annulaire (30) et l'extrémité située plus près (60) du longeron de guidage (10).

15. Longeron de guidage selon la revendication 13 ou 14, **caractérisé en ce que** le renfoncement (50) est une rainure s'étendant sur toute la périphérie du longeron de guidage (10), dont la profondeur est inférieure à la profondeur (T) de la rainure annulaire (30) dans la zone du fond de rainure (48) .
